# EUROPEAN PATENT SPECIFICATION

(11) **EP 1 286 025 B1**
(45) Date of publication and mention of the grant of the patent: **12.05.2004**
(21) Application number: 02014463.0
(22) Date of filing: 28.06.2002
(51) Int. Cl.: F01M 13/04, F01M 11/08

(54) **Blow-by gas oil separator for an internal combustion engine**
Ölabscheider für blow-by Gas einer Brennkraftmaschine
Séparateur d'hiule pour le blow-by gas d'un moteur à combustion interne

(30) Priority: 28.06.2001 JP 2001195992
(43) Date of publication of application: 26.02.2003
(73) Proprietor: YAMAHA HATSUDOKI KABUSHIKI KAISHA, Iwata-shi Shizuoka-ken (JP)
(72) Inventor: Takahashi, Yukinori, Iwata-shi, Shizuoka-ken (JP); Ono, Katsumasa, Iwata-shi, Shizuoka-ken (JP); Mori, Takao, Iwata-shi, Shizuoka-ken (JP)
(74) Representative: Grünecker, Kinkeldey, Stockmair & Schwanhäusser Anwaltssozietät

(56) References cited:
- DE-A- 4 214 324
- US-A- 4 602 595
- US-A- 6 161 529
- PATENT ABSTRACTS OF JAPAN vol. 1999, no. 13, 30 November 1999 (1999-11-30) & JP 11 210436 A (KUBOTA CORP), 3 August 1999 (1999-08-03)
- PATENT ABSTRACTS OF JAPAN vol. 1997, no. 12, 25 December 1997 (1997-12-25) & JP 09 209738 A (SUZUKI MOTOR CORP), 12 August 1997 (1997-08-12)
- PATENT ABSTRACTS OF JAPAN vol. 1999, no. 12, 29 October 1999 (1999-10-29) & JP 11 200832 A (ISEKI &CO LTD), 27 July 1999 (1999-07-27)
- PATENT ABSTRACTS OF JAPAN vol. 016, no. 030 (M-1203), 24 January 1992 (1992-01-24) & JP 03 242411 A (AISIN SEIKI CO LTD), 29 October 1991 (1991-10-29)

## Description

The present invention relates to an internal combustion engine according to the preamble portion of claim 1. In particular, the present invention relates to a blow-by gas separator of an engine.

It is know to provide a separator for separating oil from blow-by gas and returning it to a crank chamber through an oil drain passage in the middle of a blow-by gas passage allowing communication between a crank chamber and an intake passage in an engine. The separator is mounted, for example, to a blow-by gas passage in which is provided a PCV (positive crankcase ventilation valve) constituting a blow-by gas reduction system used for improving emissions.

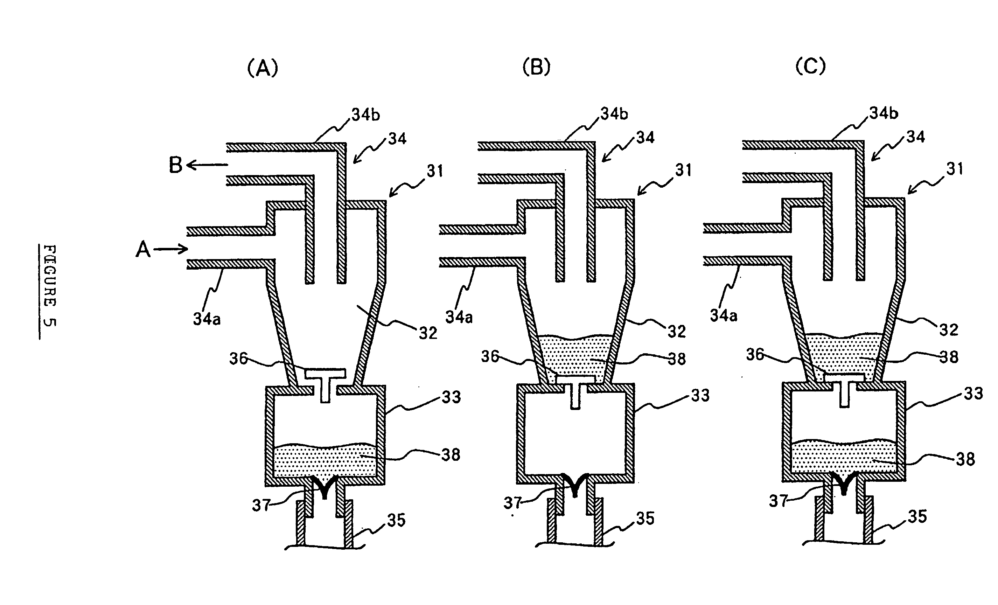

Fig. 5 shows the construction of a conventional blow-by gas separator mounted on a turbocharged engine, and the symbol (A) denotes a view in an idling condition and (B) a view in an operating condition in the range from low load (POT) to high load (WOT).

A separator 31 consisting of a separation chamber 32 and a tank chamber 33, is mounted in the middle of a blow-by gas passage 34. The blow-by gas passage 34 consists of a passage 34a connected to the PCV (not shown) and a passage 34b connected to an intake manifold (not shown), and these passages 34a, 34b are in communication with the separation chamber 32, respectively. An oil drain passage 35 is connected to the bottom of the tank chamber 33. The oil drain passage 35 is in communication with a crank chamber (not shown). On a partition section between the tank chamber 33 and the separation chamber 32 above the tank chamber 33 is mounted an overpressure valve 36. A check valve 37 is mounted to the connecting portion between the tank chamber 33 and the oil drain passage 35 below the tank chamber.

During idling operation the pressure in the intake manifold is in the range from -70 to -60 kPa, and the pressure in the crank chamber in the range from -0.2 to 0 kPa. In this condition, since the pressure on the crank chamber side is higher than that on the intake manifold side, the overpressure valve 36 is opened and the check valve 37 is closed, as shown in (A). In this condition, oil is separated from blow-by gas flowing into the separation chamber 32 from the PCV side, as shown by the arrow A, while air is returned to the intake manifold, as shown by the arrow B. The separated oil 38 is collected in the tank chamber 33. The oil 38 collected in the tank chamber 33 is returned to the crank chamber through the oil drain passage 35 in some operating condition when the pressure in the crank chamber becomes lower than that in the tank chamber and thus the check valve 37 is opened.

In a load condition with a throttle (not shown) opened, the pressure in the intake manifold is in the range from -50 to +90 kPa, and the pressure in the crank chamber in the range from -6.5 to +0.5 kPa. In this condition, the overpressure valve 36 is closed, as shown in (B). The oil 38 collected in the tank chamber 33 is returned to the crank chamber through the oil return passage 35 in some operating condition when the pressure in the crank chamber becomes lower than that in the tank chamber and thus the check valve 37 is opened.

In the conventional blow-by gas separator, however, the pressure applied on the intake manifold side is increased and thus the overpressure valve 36 is closed in some operating condition before the check valve 37 is opened with oil 38 collected in the tank chamber 33. Even if the pressure in the intake manifold is lowered in this condition, the overpressure valve 36 will not be opened unless the pressure in the separation chamber 32 becomes lower than that in the tank chamber 33. Also, the check valve 37 will not be opened unless the pressure in the crank chamber becomes lower than that in the tank chamber 33. As a result, as long as the pressure in the intake manifold is higher than that in the tank chamber 33, oil can be collected in the separation chamber 32 and flow back toward the intake manifold (Fig. 5(C)).

In view of the foregoing, it is an objective of the present invention to provide an internal combustion engine as indicated above having a blow-by gas separator capable of returning oil collected temporarily in a separator reliably toward a crank chamber through an oil drain passage without back flow toward an intake manifold.

This objective is solved in an inventive manner by an internal combustion engine having a blow-by gas passage allowing communication between a crank chamber and an intake passage comprising a separator for separating oil from the blow-by gas and returning the oil to the crank chamber through an oil drain passage, wherein the separator comprises a separation chamber and a valve mechanism provided in the lower part of the separation chamber and connected to the oil-drain passage, wherein said valve mechanism comprises first and second valve elements coupled to each other and a valve seat member defining valve seats adapted to cooperate with the respective valve elements, and wherein at least either of the first and second valve elements being separate from the associated valve seat in response to a position of the coupled valve elements.

In this arrangement, either of the first and second valve elements is necessarily opened with respect to the valve seat member. Therefore, if a change in the pressure difference on the two sides of the valve mechanism moves the valve elements, oil collected in the separation chamber while one valve element has been closed, flows out reliably to be returned to the crank chamber through the oil drain passage, preventing back flow toward the intake passage.

Preferably, the first and second valve elements are constituted by first and second valve discs.

Further preferably, said valve mechanism comprises an inlet on the side of said separation chamber and an outlet on the side of said oil drain passage, wherein the valve seat member is disposed between inlet and outlet, with the first valve element being disposed at the inlet side of the valve seat member and the second valve element being disposed at the outlet side of the valve seat member.

According to a preferred embodiment, the first and the second valve elements are coupled to each other through a valve rod extended through an opening of the valve seat member.

Beneficially, both valve elements are adapted to move in association with each other in response to a pressure difference between said inlet and outlet.

Preferably, the separator is arranged in the middle of the blow-by gas passage, wherein the blow-by gas passage consists of a passage connected to a positive crankcase ventilation valve and a passage connected to an intake manifold both and both passages being in communication with the separation chamber.

According to a further preferred embodiment, there is provided an elastic member, in particular a spring, provided between the first and second valve elements adapted to support a weight of both valve elements for establishing an intermediate position in which both valve elements are separated from the associated valve seat.

Additionally, said separator may be a cyclone-type separator or a labyrinth-type separator.

According to another preferred embodiment, said valve seat member or at least one of said valve elements is formed with a notch or an orifice for releasing gas when the respective valve element is in contact with the associated valve seat.

As said valve seat or said valve disc is formed with a notch for releasing gas when the valve disc is closed, an appropriate amount of air that does not affect operating performance, can be supplied to the crank chamber while the valve disc is closed, thereby preventing deterioration of oil in the crank chamber.

According to still another preferred embodiment, said engine is a turbocharged engine.

In this arrangement, in a turbocharged engine whose intake manifold pressure changes significantly from an idling or a low load operating condition in which the intake manifold has a negative pressure to a high load operating condition in which the intake manifold has a positive pressure, even if the pressure difference between the crank chamber and the intake manifold is changed frequently or significantly or reversed in response to the operating conditions, separated oil can be inducted toward the crank chamber through the oil drain passage without back flow toward the intake manifold.

In the following, the present invention is explained in greater detail with respect to several embodiments thereof in conjunction with the accompanying drawings, wherein:
- Fig. 1: illustrates the construction and the function of a separator according to an embodiment;
- Fig. 2: illustrates the construction and the function of another embodiment of a separator;
- Fig. 3: illustrates the blow-by gas flow in a turbocharged engine in a POT operating condition;
- Fig. 4: illustrates the blow-by gas flow in the turbocharged engine of Fig. 3 in a WOT operating condition; and
- Fig. 5: illustrates the construction of a conventional blow-by gas separator.

Embodiments of this invention will be described below with reference to the drawings.

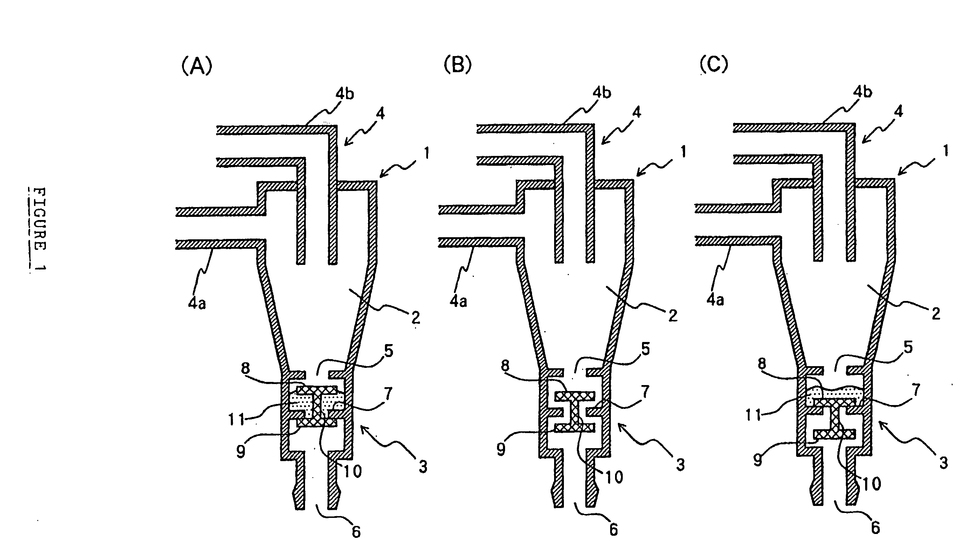

Fig. 1 are views of a separator according to an embodiment. This embodiment is exemplified by a blow-by gas separator mounted on a turbocharged engine. (A) is a view of the separator when the engine is operated in the range from an idling to a POT (partial open throttle) condition, with the intake manifold at a negative pressure, (B) a view of the same when the engine is operated in a POT condition or stopped, with the intake manifold at approximately the atmospheric pressure, and (C) a view of the same when the engine is operated in the range from a POT to a WOT (wide open throttle) high load condition, with the intake manifold at a positive pressure.

A separator 1 consists of a separation chamber 2 and a valve mechanism 3 provided in the lower part thereof, and is mounted in the middle of a blow-by gas passage 4. The valve mechanism 3 acts as a tank chamber in which oil is collected, as described later. The blow-by gas passage 4 consists of a passage 4a connected to a PCV (not shown) and a passage 4b connected to an intake manifold (not shown), and these passages 4a, 4b are in communication with the separation chamber 2.

The valve mechanism (tank chamber) 3 consists of an inlet 5 in communication with the separation chamber 2, an outlet 6 in communication with an oil drain passage (not shown), a valve seat 7 provided between the inlet 5 and outlet 6, a first valve disc 8 disposed at the inlet side of the valve seat 7 and a second valve disc 9 disposed at the outlet side of the valve seat 7. The first and the second valve disc 8, 9 are coupled to each other through a valve rod 10 passing through an opening of the valve seat 7.

If the crank chamber pressure is higher than the intake manifold pressure, as shown in (A), the first and the second valve disc 8, 9 are pushed up in association with each other, and the second valve disc 9 comes into contact with the valve seat 7 from below to be closed. In this condition, oil 11 separated in the separation chamber 2 is collected in a space above the valve seat 7.

If the crank chamber pressure is approximately equal to the intake manifold pressure (pressure difference is smaller than about 1 kPa), the first and the second valve disc 8, 9 are both spaced from the valve seat 7 and thus opened, as shown in (B). In order for both valve discs 8, 9 to be held at an intermediate position where these valve discs 8, 9 are opened, a spring (not shown) is provided which is strong enough to support the weight of both valve discs. In this condition, oil collected in the space above the valve seat 7 flows out downwardly from the valve seat 7 and into the oil drain passage (not shown) through the outlet 6 to be returned to the crank chamber. Such a condition in which the pressure difference becomes zero, appears in a transient state whenever the pressure difference is reversed, therefore when the valve discs 8, 9 are making opening and closing movements in response to the operating conditions, the oil collected in the space above the valve seat 7 is discharged in the middle of the valve stroke at all times.

If the intake manifold pressure is higher than the crank chamber pressure, the first valve disc 8 comes into contact with the valve seat 7 from above to be closed. In this condition, oil 11 separated in the separation chamber 2 is collected in a space above the valve seat 7. The oil 11 collected in the space above the valve seat 7 is discharged downwardly from the valve seat 7 when a change in the pressure difference causes the valve discs 8, 9 to be moved in response to the operating conditions.

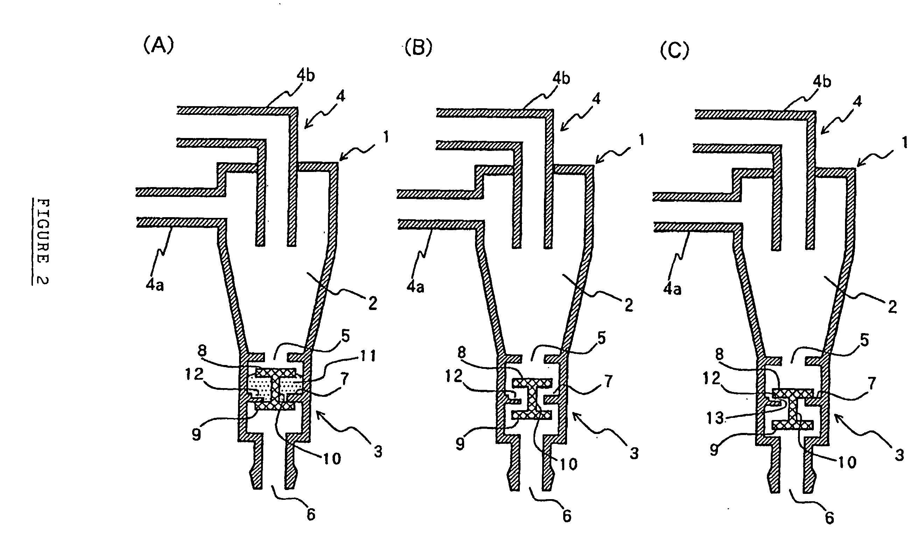

Fig. 2 are views illustrating another embodiment.

In this embodiment, a notch 12 or an orifice is formed in the upper surface of the valve seat 7. As a result of the notch 12 or the orifice being provided, as shown in (C), a gap 13 is formed between the valve seat 7 and the first valve disc 8 with the first valve disc closed at the time of supercharging when the pressure on the intake manifold side is higher, and clean air (air containing no oil) leaks from the intake manifold side through the gap 13 to be inducted into the crank chamber. In this case, if oil has been collected in the space above the valve seat 7 at the time of the previous operating condition, the collected oil is returned to the crank chamber through the gap 13. As a result of the clean air being inducted into the crank chamber, deterioration of oil in the crank chamber is prevented. The size of the notch 12 or the orifice is adjusted in advance such that the amount of air inducted into the crank chamber is smaller than that which does not lower the engine performance in the crank chamber.

At the time of supercharging as described above, clean air may flow back through a PCV to be inducted into the crank chamber. In this case, the size of the notch 12 or the orifice is adjusted in advance such that the amount of air inducted into the crank chamber through the separator combined with the amount of air inducted into the crank chamber through a PCV is smaller than that which does not lower the engine performance in the crank chamber. Alternatively, induction of clean air from the PCV may be stopped so that the clean air is inducted into the crank chamber only from the separator.

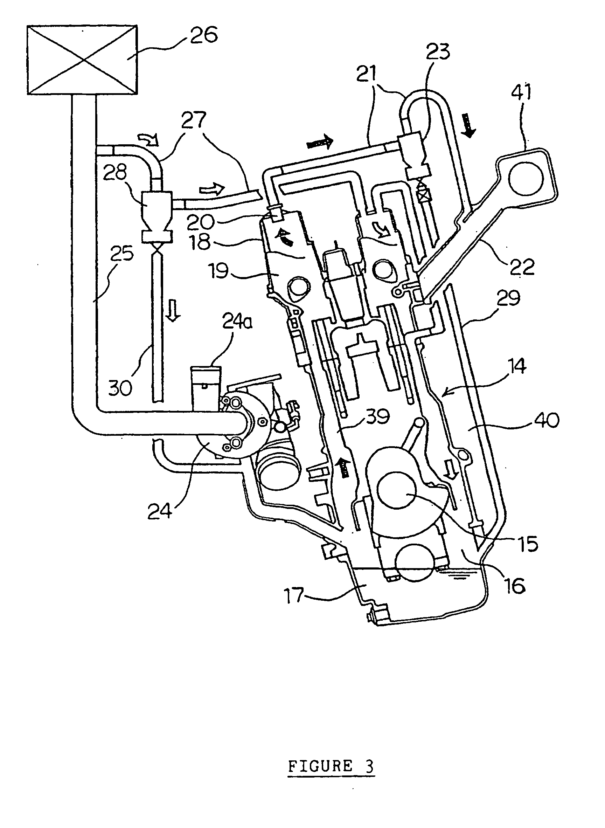

Fig. 3 is a structural view of a turbocharged engine incorporating the separator of Fig. 1 or 2, showing the air flow in a POT condition. The white arrows show the clean air flow, and the black arrows the blow-by gas flow.

At the lower part of an engine 14 are formed a crank chamber 16, in which is provided a crankshaft 15 and in the bottom of which is collected oil 17. Within a cylinder head 18 at the upper part of the engine 14 is formed a cam chamber 19, at the top of which is provided a PCV 20. The upper part of the cam chamber inside the cylinder head 18 is in communication with the crank chamber 16 through communication paths 39, 40 for oil drainage and blow-by gas passage.

To the PCV 20 is connected a blow-by gas passage 21. The PCV 20 is in communication with an intake manifold 22 through the blow-by gas passage 21. In the middle of the blow-by gas passage 21 is provided a separator 23 of the same construction as is shown in Fig. 1 or 2. To the bottom of the separator 23 is connected an oil drain passage 29, through which oil separated in the separator 23 is returned to the crank chamber 16, as described above.

A surge tank 41 is provided on the upstream side of the intake manifold 22. The surge tank 41 is connected to an inlet 24a of a turbocharger 24 through an intake pipe (not shown). In the intake pipe is provided a throttle (not shown). An air cleaner 26 is connected to the turbocharger 24 at the inlet side through an intake passage 25. The intake passage 25 is in communication with the cylinder head 18 through a blow-by gas passage 27. In the middle of the blow-by gas passage 27 is provided a separator 28 of the same construction as is shown in Fig. 1 or 2. To the bottom of the separator 28 is connected an oil drain passage 30, through which separated oil is returned to the crank chamber 16.

If the crank chamber pressure is higher than the intake manifold pressure in a POT operating condition, blow-by gas flows through the blow-by gas passage 21 via the PCV 20, as shown in the figure by black arrows, and oil is separated in the separator 23 disposed in the middle of the passage to be returned to the intake manifold 22. The separated oil is returned to the crank chamber 16 through the oil drain passage 29.

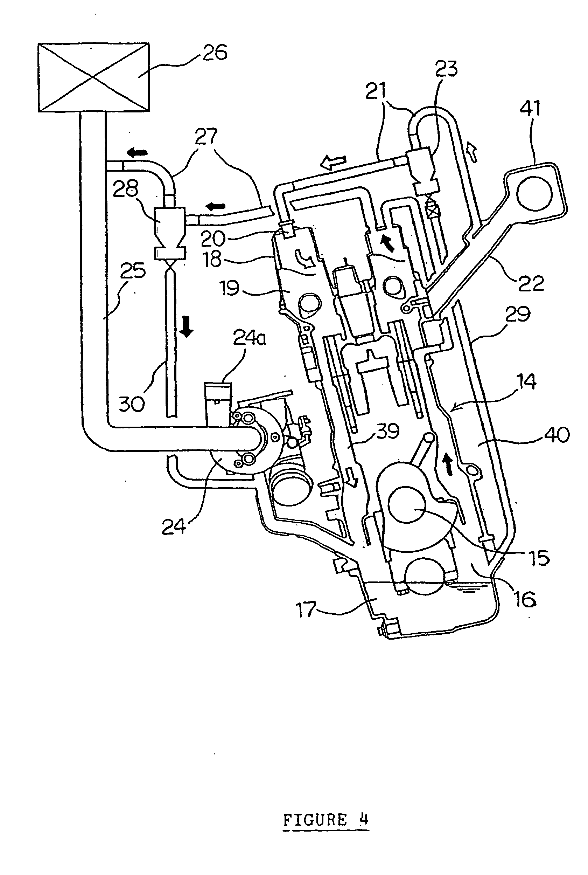

Fig. 4 shows the blow-by gas flow in the turbocharged engine of Fig. 3 in a WOT operating condition.

If the intake manifold pressure is higher than the crank chamber pressure in a supercharging condition, blow-by gas shown in the figure by black arrows, flows through the crank chamber 16, the communication path 40 and the blow-by gas passage 27, and it is inducted into the intake passage 25 downstream from the air cleaner 26 after oil is separated in an separator 28. At this time, clean air is inducted into the crank chamber 16 from the intake manifold side at high pressure through the separator 23 and PCV 20.

Although a cyclone type separator has been shown in the foregoing embodiments, separators of other types may be used (for example, labyrinth type). In addition, this invention is not limited to turbocharged engines, but applicable to other engines.

According to the embodiment of this invention as described above, the valve mechanism forming the tank chamber at the bottom of the separator consists of a first and a second valve disc coupled to each other, and either of the first and the second valve disc is necessarily opened with respect to the valve seat. Therefore, if a change in the pressure difference between the inlet side and the outlet side of the valve mechanism moves the valve discs, oil collected in the separation chamber while one valve disc has been closed, flows out reliably to be returned to the crank chamber through the oil drain passage, thereby preventing back flow of oil due to a change in the pressure difference, toward the intake passage.

The description also refers to a blow-by gas separator provided in the middle of a blow-by gas passage allowing communication between a crank chamber and an intake passage in an engine for separating oil from blow-by gas and returning it to the crank chamber through an oil drain passage, said blow-by gas separator having a separation chamber in which air and oil are separated, and a valve mechanism disposed in the lower part of the separation chamber, said oil drain passage being connected to said valve mechanism, wherein said valve mechanism has an inlet on the side of said separation chamber and an outlet on the side of said oil drain passage; a valve seat is disposed between the inlet and the outlet; at one side of the valve seat is disposed a first valve disc and at the other side thereof a second valve disc; and the first and the second valve disc are coupled to each other such that both valve discs move in association with each other in response to the pressure difference between said inlet and outlet and when one valve disc is closed the other valve disc is opened.

In this embodiment, either of the first and the second valve disc is necessarily opened with respect to the valve seat, therefore if a change in the pressure difference between the inlet side and the outlet side of the valve mechanism moves the valve discs, oil collected in the separation chamber while one valve disc has been closed, flows out reliably to be returned to the crank chamber through the oil drain passage, preventing back flow toward the intake passage.

In a preferred embodiment, said valve seat or said valve disc is formed with a notch for releasing gas when the valve disc is closed.

In this embodiment, an appropriate amount of air that does not affect operating performance, can be supplied to the crank chamber while the valve disc is closed, thereby preventing deterioration of oil in the crank chamber.

In another preferred embodiment, said engine is a turbocharged engine.

In this embodiment, in a turbocharged engine whose intake manifold pressure changes significantly from an idling or a low load operating condition in which the intake manifold has a negative pressure to a high load operating condition in which the intake manifold has a positive pressure, even if the pressure difference between the crank chamber and the intake manifold is changed frequently or significantly or reversed in response to the operating conditions, separated oil can be inducted toward the crank chamber through the oil drain passage without back flow toward the intake manifold.

Thus, briefly summarizing the above, there is provided a blow-by gas separator capable of returning oil collected temporarily in a separator reliably toward a crank chamber through an oil drain passage without back flow toward an intake manifold, wherein said blow-by gas separator 1 is provided in the middle of a blow-by gas passage 4 allowing communication between a crank chamber and an intake passage in an engine for separating oil from blow-by gas and returning it to the crank chamber through an oil drain passage, said blow-by gas separator having a separation chamber 2 in which air and oil are separated, and a valve mechanism 3 provided in the lower part of the separation chamber, said oil drain passage being connected to said valve mechanism 3, wherein valve mechanism 3 has an inlet 5 and an outlet 6; a valve seat 7 is provided between the inlet and the outlet; at one side of the valve seat 7 is disposed a first valve disc 8 and at the other side thereof a second valve disc 9; and the first and the second valve disc 8, 9 are coupled to each other such that both valve discs 8, 9 move in association with each other in response to the pressure difference between said inlet 5 and outlet 6 and when one valve disc is closed the other valve disc is opened.

## Claims

1. Internal combustion engine having a blow-by gas passage (4) allowing communication between a crank chamber (16) and an intake passage comprising a separator (1) for separating oil from the blow-by gas and returning the oil to the crank chamber (16) through an oil drain passage, wherein the separator (1) comprises a separation chamber (2) and a valve mechanism (3) provided in the lower part of the separation chamber (2) and connected to the oil-drain passage, **characterized in that** said valve mechanism (3) comprises first and second valve elements (8,9) coupled to each other and a valve seat member (7) defining valve seats adapted to cooperate with the respective valve elements (8,9), wherein at least either of the first and second valve elements (8,9) being separate from the associated valve seat in response to a position of the coupled valve elements (8,9).

2. Internal combustion engine according to claim 1, **characterized by** first and second valve discs constituting the first and second valve elements (8,9).

3. Internal combustion engine according to claim 1 or 2, **characterized in that** said valve mechanism (3) comprises an inlet (5) on the side of said separation chamber (2) and an outlet (6) on the side of said oil drain passage, wherein the valve seat member (7) is disposed between inlet (5) and outlet (6), with the first valve element (8) being disposed at the inlet side of the valve seat member (7) and the second valve element (9) being disposed at the outlet side of the valve seat member (7).

4. Internal combustion engine according to at least one of the preceding claims 1 to 3, **characterized in that** the first and the second valve elements (8,9) are coupled to each other through a valve rod (10) extended through an opening of the valve seat member (7).

5. Internal combustion engine according to at least one of the preceding claims 1 to 4, **characterized in that** both valve elements (8,9) are adapted to move in association with each other in response to a pressure difference between said inlet (5) and outlet (6).

6. Internal combustion engine according to at least one of the preceding claims 1 to 5, **characterized in that** the separator is arranged in the middle of the blow-by gas passage (4), wherein the blow-by gas passage (4) consists of a passage (4a) connected to a positive crankcase ventilation valve and a passage (4b) connected to an intake manifold both and both passages being in communication with the separation chamber (2).

7. Internal combustion engine according to at least one of the preceding claims 1 to 6, **characterized by** an elastic member, in particular a spring, provided between the first and second valve elements (8,9) adapted to support a weight of both valve elements (8,9) for establishing an intermediate position in which both valve elements (8,9) are separated from the associated valve seat.

8. Internal combustion engine according to at least one of the preceding claims 1 to 7, **characterized in that** said separator is a cyclone-type separator or a labyrinth-type separator.

9. Internal combustion engine according to at least one of the preceding claims 1 to 8, **characterized in that** said valve seat member (7) or at least one of said valve elements (8) is formed with a notch (12) or an orifice for releasing gas when the respective valve element is in contact with the associated valve seat.

10. Internal combustion engine according to at least one of the preceding claims 1 to 9, **characterized in that** said engine is a turbocharged engine.

## Patentansprüche

1. Brennkraftmaschine, die einen Beiblas- Gaskanal (4) hat, der die Kommunikation zwischen einer Kurbelkammer (16) und einem Einlasskanal, der einen Separator (1) aufweist, gestattet, um Öl von dem Beiblasgas zu separieren und um das Öl zu der Kurbelkammer (16) durch einen Ölablaufkanal zurück zu führen, wobei der Separator (1) eine Trennkammer (2) und eine Ventilvorrichtung (3), vorgesehen in dem unteren Teil der Trennkammer (2) und mit dem Ölablaufkanal verbunden, aufweist, **dadurch gekennzeichnet, dass** die Ventilvorrichtung (3) erste und zweite Ventilelemente (8, 9), die miteinander gekoppelt sind, und ein Ventilsitzteil (7) aufweist, das die Ventilsitze bildet, vorgesehen, um mit den jeweiligen Ventilelementen (8, 9) zusammenzuwirken, wobei zumindest eines der ersten und zweiten Ventilelemente (8, 9) von dem zugehörigen Ventilsitz in Abhängigkeit von einer Position der gekoppelten Ventilelemente (8, 9) getrennt ist.

2. Brennkraftmaschine nach Anspruch 1, **gekennzeichnet durch** erste und zweite Ventilscheiben, die das erste und zweite Ventilelement (8, 9) bilden.

3. Brennkraftmaschine nach Anspruch 1 oder 2, **dadurch gekennzeichnet, dass** die Ventilvorrichtung (3) einen Einlass (5) auf der Seite der Trennkammer (2) und einen Auslass (6) auf der Seite des Ölablaufkanales aufweist, wobei das Ventilsitzteil (7) zwischen dem Einlass (5) und dem Auslass (6) angeordnet ist, mit dem ersten Ventilelement (8), angeordnet auf der Einlassseite des Ventilsitzteiles (7), und dem zweiten Ventilelement (9), angeordnet auf der Auslassseite des Ventilsitzteiles (7).

4. Brennkraftmaschine nach zumindest einem der vorhergehenden Ansprüche 1 bis 3, **dadurch gekennzeichnet, dass** das erste und das zweite Ventilelement (8, 9) miteinander durch eine Ventilstange (10), gekoppelt sind, die sich durch eine Öffnung des Ventilsitzteiles (7), erstreckt.

5. Brennkraftmaschine nach zumindest einem der vorhergehenden Ansprüche 1 bis 4, **dadurch gekennzeichnet, dass** beide Ventilelemente (8, 9) vorgesehen sind, sich in Verbindung miteinander in Abhängigkeit von einem Druckunterschied zwischen dem Einlass (5) und dem Auslass (6) zu bewegen.

6. Brennkraftmaschine nach zumindest einem der vorhergehenden Ansprüche 1 bis 5, **dadurch gekennzeichnet, dass** der Separator in der Mitte des Beiblas- Gaskanales (4) angeordnet ist, wobei der Beiblas- Gaskanal (4) aus einem Kanal (4a), verbunden mit einem Kurbelgehäuse- Zwangsventilationsventil, und einem Kanal (4b), verbunden mit einem Einlassverteiler, besteht, und beide Kanäle in Verbindung mit der Trennkammer (2) sind.

7. Brennkraftmaschine nach zumindest einem der vorhergehenden Ansprüche 1 bis 6, **gekennzeichnet durch** ein elastisches Teil, insbesondere eine Feder, vorgesehen zwischen dem ersten und dem zweiten Ventilelement (8, 9), angepasst um ein Gewicht der beiden Ventilelemente (8, 9) zu tragen, um eine Zwischenposition zu gründen, in der beide Ventilelemente (8, 9) von dem zugehörigen Ventilsitz getrennt sind.

8. Brennkraftmaschine nach zumindest einem der vorhergehenden Ansprüche 1 bis 7, **dadurch gekennzeichnet, dass** der Separator ein Separator vom Zyklon- Typ oder ein Separator vom Labyrinth- Typ ist.

9. Brennkraftmaschine nach zumindest einem der vorhergehenden Ansprüche 1 bis 8, **dadurch gekennzeichnet, dass** das Ventilsitzteil (7) oder zumindest eines der Ventilelement (8) mit einer Kerbe (12) oder einer Drosselstelle gebildet ist, um Gas auszulassen, wenn das jeweilige Ventilelement mit dem zugehörigen Ventilsitz in Kontakt ist.

10. Brennkraftmaschine nach zumindest einem der vorhergehenden Ansprüche 1 bis 9, **dadurch gekennzeichnet, dass** der Motor ein turboaufgeladener Motor ist.

## Revendications

1. Moteur à combustion interne doté d'un passage des gaz de carter (4) permettant une communication entre une chambre de manivelle (16) et un passage d'admission comprenant un séparateur (1) pour séparer l'huile des gaz de carter et renvoyer l'huile vers la chambre de manivelle (16) à travers un passage de purge d'huile, dans lequel le séparateur (1) comprend une chambre de séparation (2) et un mécanisme de soupape (3) prévu dans la partie inférieure de la chambre de séparation (2) et raccordé au passage de purge d'huile, **caractérisé en ce que** ledit mécanisme de soupape (3) comprend des premier et second éléments de soupape (8, 9) couplés entre eux et un élément de siège de soupape (7) qui définit des sièges de soupape adaptés pour coopérer avec les éléments de soupape respectifs (8, 9), dans lequel au moins chacun des premier et second éléments de soupape (8, 9) sont séparés du siège de soupape associé en réponse à une position des éléments de soupape couplés (8, 9).

2. Moteur à combustion interne selon la revendication 1, **caractérisé en ce qu'**il comprend des première et seconde têtes de soupape qui constituent les premier et second éléments de soupape (8, 9).

3. Moteur à combustion interne selon la revendication 1 ou 2, **caractérisé en ce que** ledit mécanisme de soupape (3) comprend une entrée (5) du côté de ladite chambre de séparation (2) et une sortie (6) du côté dudit passage de purge d'huile, dans lequel l'élément de siège de soupape (7) est disposé entre l'entrée (5) et la sortie (6), le premier élément de soupape (8) étant disposé du côté de l'entrée de l'élément de siège de soupape (7) et le second élément de soupape (9) étant disposé du côté de la sortie de l'élément de siège de soupape (7).

4. Moteur à combustion interne selon au m oins l'une des revendications précédentes 1 à 3, **caractérisé en ce que** le premier et le second élément de soupape (8, 9) sont couplés entre eux par le biais d'une queue de soupape (10) étendue à travers une ouverture de l'élément de siège de soupape (7).

5. Moteur à combustion interne selon au moins l'une des revendications précédentes 1 à 4, **caractérisé en ce que** les deux éléments de soupape (8, 9) sont adaptés pour se déplacer en association l'un avec l'autre en réponse à une différence de pression entre ladite entrée (5) et ladite sortie (6).

6. Moteur à combustion interne selon au moins l'une des revendications précédentes 1 à 5, **caractérisé en ce que** le séparateur est agencé au centre du passage des gaz de carter (4), dans lequel le passage des gaz de carter (4) se compose d'un passage (4a) raccordé à une soupape de recirculation du carter de moteur et d'un passage (4b) raccordé à une tubulure d'admission, et les deux passages étant en communication avec la chambre de séparation (2).

7. Moteur à combu stion interne selon au moins l'une des revendications précédentes 1 à 6, **caractérisé par** un élément élastique, en particulier un ressort, prévu entre les premier et second éléments de soupape (8, 9) adapté pour supporter un poids des deux éléments de soupape (8, 9) afin de déterminer une position intermédiaire dans laquelle les deux éléments de soupape (8, 9) sont séparés du siège de soupape associé.

8. Moteur à combustion interne selon au moins l'une des revendications précédentes 1 à 7, **caractérisé en ce que** ledit séparateur est un séparateur de type cyclone ou un séparateur de type labyrinthe.

9. Moteur à combustion interne selon au moins l'une des revendications précédentes 1 à 8, **caractérisé en ce que** ledit élément de siège de soupape (7) ou au moins l'un desdits éléments de soupape (8) est formé avec une encoche (12) ou un orifice pour libérer les gaz lorsque l'élément de soupape respectif est en contact avec le siège de soupape associé.

10. Moteur à combustion interne selon au moins l'une des revendications précédentes 1 à 9, **caractérisé en ce que** ledit moteur est un moteur à turbocompresseur.
